# EUROPEAN PATENT SPECIFICATION

(11) **EP 1 107 504 B1**
(45) Date of publication and mention of the grant of the patent: **21.03.2007**
(21) Application number: 00480089.2
(22) Date of filing: 28.09.2000
(51) Int. Cl.: H04L 9/08

(54) **Method of updating encryption keys in a data communication system**
Verfahren zur Aktualisierung von Geheimschlüsseln in einem Datenkommunikationssystem
Procédé de mise à jour de clés de chiffrage dans un système de communication de données

(30) Priority: 02.12.1999 EP 99480123
(43) Date of publication of application: 13.06.2001
(73) Proprietor: International Business Machines Corporation, Armonk, NY 10504 (US)
(72) Inventor: Benayoun, Alain, 06800 Cagnes-sur-Mer (FR); Le Pennec, Jean François, 06100 Nice (FR); Michel, Patrick, 06610 La Gaude (FR)
(74) Representative: Etorre, Yves Nicolas

(56) References cited:
- EP-A- 1 032 159
- WO-A-98/51035
- US-A- 4 157 454
- US-A- 4 661 657
- US-A- 5 995 624
- ZIV J ET AL: "COMPRESSION OF INDIVIDUAL SEQUENCES VIA VARIABLE-RATE CODING" IEEE TRANSACTIONS ON INFORMATION THEORY, IEEE INC. NEW YORK, US, vol. IT-24, no. 5, September 1978 (1978-09), pages 530-536, XP000565213 ISSN: 0018-9448
- SCHNEIER: "Applied Cryptography, Second Edition" 1996 , JOHN WILEY & SONS , NEW YORK XP002249710 * page 180, line 23 - line 34 *
- TAKAYA YAMAZATO; IWAO SASASE; SHINSAKU MORI: 'INTERLACE CODING SYSTEM INVOLVING DATA COMPRESSION CODE, DATA ENCRYPTION CODE AND ERROR CORRECTING CODE' IEICE TRANSACTIONS ON COMMUNICATIONS vol. E75-B, no. 6, 01 June 1992, COMMUNICATIONS SOCIETY, TOKYO, JP, pages 458 - 465, XP000310869
- PATENT ABSTRACTS OF JAPAN vol. 018, no. 230 (E-1542) 26 April 1994 & JP 06 021 854 A (MATSUSHITA ELECTRIC IND CO LTD) 28 January 1994
- PATENT ABSTRACTS OF JAPAN vol. 010, no. 244 (E-430) 22 August 1986 & JP 61 073 445 A (NEC CORP) 15 April 1986
- PATENT ABSTRACTS OF JAPAN vol. 010, no. 046 (E-383) 22 February 1986 & JP 60 200 628 A (FUJITSU LTD) 11 October 1985

## Description

### Technical field

The present invention relates generally to secure communications when data must be sent from a transmit device to a receive device in an encrypted form and particularly refers to a method of dynamically updating encryption keys without having to transmit them.

### Background art

Secure communications systems, based on cryptography, are used to prevent unauthorized access to data on communications links so that sensitive information can be exchanged with little risk of eavesdropping. In typical point-to-point cryptographic systems, an encryption device transmits encrypted or coded digital data to a decryption device over a secure data link.

The digital data is encoded using a key known only to the encryption and decryption parties in order to deny data access by any unauthorized third party. This scheme implicitly refers to symmetric encryption, the conventional method of insuring security in the exchange of information being characterized in that the same key is used both for encryption and decryption. The security of symmetric encryption remains in the key i.e., divulging the key means that anyone could encrypt and decrypt messages. That is why the algorithms used for symmetric encryption are also referred to as secret-key algorithms. The best example of this is DES, which stands for Data Encryption Standard, and which has been indeed a standard since the 70's and is still universally used. Again, the security of such an algorithm resides only in the key and does not depend, whatsoever, on the secrecy of the algorithm. On the contrary, as a standard, the algorithm is completely specified and made available to all users.

DES is a block cipher algorithm wherein data are encrypted and decrypted in 64-bit blocks. A 64-bit block of text is converted by the algorithm into a 64-bit block of cipher text, with no overhead, except the necessary padding to make the whole message encode a multiple of 64 bits. The basic key is 56-bit long although it is expressed as a 64-bit number since a parity bit, per byte, is used for parity checking however, ignored by the algorithm. Thus, the key can be any 56-bit number and can possibly be changed any time provided both parties have a secure means to agree on a new key before exchanging data. To improve the strength of DES i.e., to increase the difficulty of breaking it, triple pass DES with 112-bit key or 168-bit key is also commonly used nowadays. Because DES has been around for over 20 years, it has been thoroughly tested and has behaved remarkably well against years of cryptanalysis. Although it is still secure, it becomes obviously relatively weaker due to the dramatic increase in power computation now available in a single computer and even more in a group of computers cooperating to break such a code. Therefore, breaking DES consists 'only' in retrieving the particular key that was used to encode a message or a file since algorithm itself is completely known as stated above. The trivial way of achieving this being a brute-force attack in which all 2⁵⁶ keys of standard DES would be tried, insures that, on the average, after 2²⁸ attempts, encryption key may be found.

Thus, besides the length of the key, which is the prime contributor to prevent DES to be easily cracked, the other very important contributor is the duration during which such a key stays in use between two parties that want to keep secret the content of the information they are exchanging. As a general rule no encryption key should be used for an indefinite period of time since the longer a key is used, the greater the risk it will be compromised (loss, accident e.g., a key could be accidentally displayed in clear due an application software bug) and the greater the temptation for someone to spend the effort necessary to break it. Breaking a key shared by two banks for an extended period of time e.g. one month, would enable a hacker to interfere in the exchange of money between those two banks during the same period of time. Also, the more data are secured with a given key, the more devastating the loss if the key is compromised. Finally, a long lifetime of a key also provides more ammunition for an adversary to break it since the adversary potentially has access to significantly more data to work with. Thus, it is clear that it would be highly desirable that keys should remain in use for short or very short periods of time (and ideally only for one session) so that no attack could reasonably be conducted with a good chance of success before key is updated. However, this brings the usual problem, in symmetric cryptography, to have to distribute the keys shared by pairs of users over a large network.

To solve this problem, asymmetric encryption was devised. RSA algorithm (named after its creators i.e., Rivest, Shamir and Adelman) and asymmetric algorithms in general solve the problem by using two keys: one private (secret) key and one public key. Public key of party A is made accessible to anybody who has to talk to A. Thus, when party B is ready to talk to A, it must use A public key to encode a message and because the scheme is asymmetric, only A using its private (secret) key, will be able to decode the message. Therefore, the message can contain the secret key to be shared by two users utilizing the symmetric encryption method previously described i.e. DES. This way of doing, which is nowadays a standard is, in practice, required because RSA and generally speaking all known public-key algorithms assume a lot of calculations involving exponentiation and/or discrete logarithms to be computed on very large numbers. A RSA secret-key is now commonly a 1024-bit binary word (rapid progresses have been reported in the recent years on the cracking of RSA-like keys forcing the use of very large keys so that 2048-bit and 4096-bit keys are considered in the implementation of the crypto-processors specialized to process RSA and DES algorithms for fast encryption) assuming that exponentiations in that range are performed to encrypt a message. Thus, RSA algorithm is reported to be several orders of magnitude slower than DES, which explain why both are most often combined to implement a cryptographic system.

Before the encryption, the compression of data is very often used in data communications systems. The objective is twofold. Besides limiting the memory required to store a compressed file, the chief advantage is that less data have to be transmitted overall, thus saving bandwidth on expensive communications lines. Also, data compression can make cryptanalysis more difficult. Most often, to launch an attack especially, a brute-force attack, a cryptanalyst needs a small amount of cipher data and the corresponding plain data. In practice, this may not be difficult to obtain since communications protocols, at various levels, have standard message headers whose formats are well known. Since data compression is performed on top of encryption, the corresponding plain data are meaningless or at least it becomes very difficult to match a particular protocol header. Especially, the numerous data compression techniques derived from the Ziv-Lempel method (J. Ziv and A. Lempel, "Compression of individual sequences via variable-rate coding," IEEE Trans. Inform. Theory, vol~IT-24, no~5, 1978) assume the use of an evolving dictionary in each node where data are compressed and decompressed. Then, dictionary contains the codeword representation based on a tree structure with brother, son and parent links and the corresponding character on each node or leaf. It is possible to start with an empty dictionary which needs to contain however, the first character of each sub-tree. Although dictionary is constantly evolving, it is kept identical on both ends while no specific data exchange need to take place to maintain the same contents. This is achieved from the transmitted data itself. With such a scheme, an identical evolving database is thus available on either end of a communication link while the changes cannot be deduced, from the observation by an eavesdropper, of the data exchanged over the line. Therefore, a dynamic key can be derived from the directory contents using some form of one-way function such as hashing in order to frequently generate new keys.

Therefore, even if data compression before encryption can improve the security inasmuch as the compression increases the difficulty of cracking the encryption key, a perfect security can be obtained only by changing frequently the encryption key. Although RSA key can be used to exchange new secret keys, such an exchange involve resources, adds overhead and stops the normal data transmission since the security association should be restarted. This is why secret keys are not changed very often and would never be changed at each packet. But keeping the same key during some time opens ways to spy, modify, reroute or copy the data using copy and paste to another stream and is not safe whatever the complexity of the encryption is.

US patent 4,157,454 entitled "Method and System for Machine Enciphering and deciphering" discloses a method and system wherein variable length data words are processed segment-by-segment together with corresponding segments of an enciphering key. As a function of the contents of a data segment, one of several modification modes is chosen. In accordance with the chosen modification mode, the enciphering key is changed following each enciphering operation of a segment. The described steps are preferably carried out three times for the full data word. The result of the third cycle represents the enciphered data word. Deciphering is effected in the same manner.

Publication entitled "Interlace Coding System Involving Data Compression Code, Data Encryption Code and Error Correcting Code" (2334B IEICE TRANSACTIONS ON COMMUNICATIONS Vol. E-75B, no. 6, June 1992, pages 458-465 TOKYO) discloses an Interface Coding System (ICS) involving data compression code, data encryption code and error correction code with an analysis on the error performance on additive white Gaussian noise (AWGN) channel with quadrature phase shift keying (QPSK). The proposed system handles data compression, data encryption and error correcting processes together, i.e. adds error correcting redundancy to the block lists of the dictionary in which compression system constructs to reduce source redundancy. Each block list is encoded by Ziv-Lempel code and Data Encryption Standard (DES). As the catastrophic condition determined by the data compression procedure is not negligible, error correcting redundancy should be added so as to avoid catastrophic condition. It has been found that the catastrophic condition depends only on the size of the dictionary for the proposed system. Thus by employing a large dictionary, good error performance can be applied by the proposed system and the catastrophic condition can be avoided.

### Summary of the invention

Therefore, the main object of the invention is to improve the security of a symmetric cryptographic system by allowing to change frequently the common secret key.

It is a further object of the invention to provide a method of dynamically updating the common encryption/decryption key of a symmetric encryption system on both ends of a secure communication link without having to actually exchange a new key, thus avoiding the frequent use of a public-key asymmetric encryption system or any equivalent system of distributing keys.

It is another object of the invention to derive the next secret key to use from an evolving database, the contents of which are kept identical on both ends of a communication link, such as the dictionary of a data compressing system.

The invention relates therefore to a method of updating in a data communications system, the encryption key shared by nodes on both ends of a communication link. The nodes include an identically evolving data base. When having to transmit data from one of the nodes towards its peer remote node, the data base is first updated from the data to be transmitted. Then, from the current value of a key, encryption is performed over the data that are thus transmitted to the peer remote node. After which, a next-to-use encryption key is derived from the new contents of the data base. When the encrypted data are received by the peer remote node, they are first decrypted with the current value of the encryption key. Then, the data base of peer remote node is updated identically from the received decrypted data. From the contents of the data base, a next-to-use encryption key is derived, thereby obtaining in the peer remote node a next-to-use identical key.

In a preferred embodiment of the invention the data base is the dictionary of a data compression/decompression system used simultaneously with encryption/decryption to transmit data. The method of the invention permits that the key of a symmetric encryption system be frequently updated on both ends of a secure communication link thus, greatly improving security, without requiring that new keys need to be actually transmitted.

### Brief description of the drawings

Further objects, features and advantages of the present invention will become apparent to the one skilled in the art upon examination of the following description in reference to the accompanying drawings.
- Fig. 1 is a schematic block-diagram showing the minimum network configuration necessary to implement the method according to the invention.
- Fig. 2 is a block diagram of a node comprising all the features used to implement the method according to the invention.
- Fig. 3 is a flow chart showing the different steps to the method according to the invention when transmitting to a remote node.
- Fig. 4 is a flow chart showing the different steps of the method according to the invention when receiving from a remote node.

### Detailed description of the invention

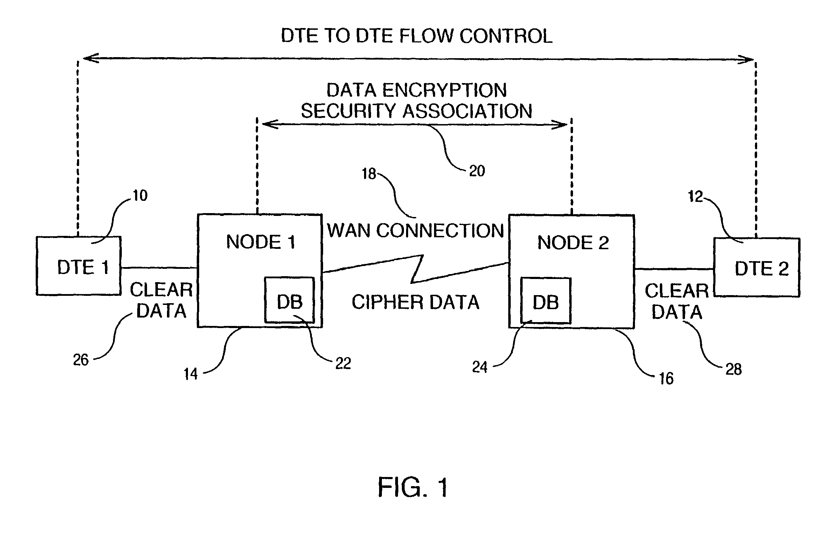

Fig. 1 describes the minimum network configuration necessary to better understand the framework of the invention. In this network two DTE's (data terminal equipment) devices DTE1 10 and DTE2 12 communicating respectively through nodes NODE 1 14 and NODE 2 16 have to establish a secure communication over e.g. a WAN (Wide Area Network) connection 18 thus, forming a security association 20 referred to as SA in the following. Therefore, nodes 14 and 16 have the capability of encrypting and decrypting their communications using a common secret key. The key is kept constantly updated, with the mechanism of the invention as further described in the following figures, so as to greatly improve the security of the transactions over the WAN connection 18. This mechanism is based on the assumption that an evolving data base 22 or 24 is present in each node the contents of which are kept identical. On the contrary, communications between DTE1 and NODE 1 14 on one hand and between DTE2 and NODE 2 16 on the other hand are in clear since they are assumed to be performed in a secure confined environment, e.g. within a single box located in user's premises. The method of the invention assumes that a first common key is available in NODE 1 14 and NODE 2 16 to start playing with. The way this is achieved (once at initialization and possibly at regular intervals or on the occurrence of an event later on) is beyond the scope of the invention and could be performed, e.g. through the use of a public-key algorithm, such as RSA, well known from the art and briefly described here above in the background art section, or through any other method of distributing a secret key. It is worth noting that forming such a SA or restoring it after a while (because SAs are generally configured so as they time out anyway, for security sake, irrespective of the traffic, but are only restored on demand) is disruptive for the ongoing traffic, or needs time to be re-established, while the method of the invention which allows to frequently update keys does not hold traffic whatsoever.

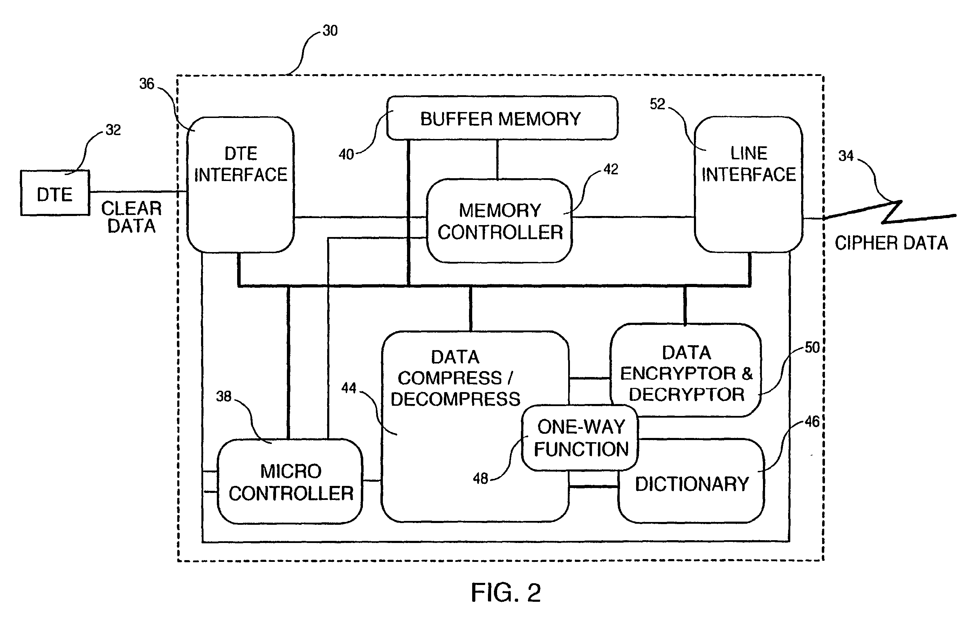

Fig. 2 better describes a node 30, of the kind shown in Fig. 1, interfacing a DTE 32 on one end and a transmission line 34 on the other end. The Node includes a 'DTE Interface and Flow Control circuitry' 36 whose function, in cooperation with 'MicroController' 38, is to achieve the temporary storing, into a 'Buffer Memory' 40, of the data stream or packets received from DTE 32 so that they are eventually transmitted to a remote node. As an example, this is performed here with the help of a 'Memory and DMA (Direct Memory Access) Controller' 42. Then, data packets are sent to a 'Data Compressor/Decompressor' 44 which uses and updates a Dictionary 46. On each data packet or set of packets, forming an entity to be transmitted over the transmission line 34, a one-way function 48 such as hashing or CRC (Cyclic Redundancy Checking) is performed on Dictionary 46 so as to compute a fixed-size digest or signature of it reflecting its current contents. This is typically a 100-bit to 200-bit vector which is passed to 'Data Encryptor and Decryptor' 50 from which the next key to be used is generated and used over the compressed data also sent to 'Data Encryptor and Decryptor' 50. Then, encrypted packets are sent to a remote node through a Line Interface and Flow Control circuitry 52 for low layer encapsulation and transmission over line 34.

Receiving is similar to what is just described here above in reverse order though. Encrypted data received from the line 34 are stored alike in 'Buffer Memory' 40 after having been decrypted using the current key available in 'Data Encryptor and Decryptor' 50. Once decrypted, compressed data is sent to 'Data Compressor/Decompressor' 44 and Dictionary 46 is updated, allowing to generate a new key value derived from the new contents of the dictionary with the same one-way function 48 here above mentioned. This new value is passed to 'Data Encryptor and Decryptor' 50 in order to be used for a next data packet or set of data packets. The decompressed data is stored temporarily in Buffer Memory 40 before being sent, in clear, to DTE 32 through 'DTE Interface and Flow Control' circuitry 36.

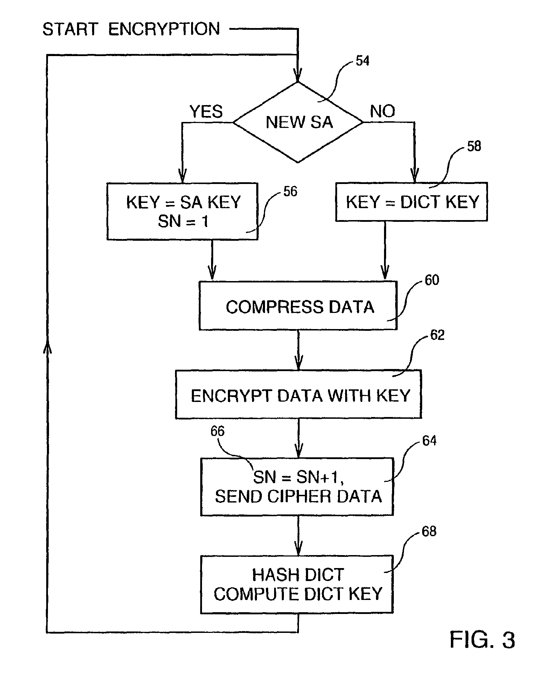

Fig. 3 describes the encryption process which starts when a new key has been made available in both nodes i.e., in nodes 14 and 16 shown previously in Fig. 1, which are then able to establish a secure communication between them forming a new security association or SA already discussed in Fig. 1. Step 54 checks whether a new SA has just been defined. This is the case whenever a secure communication is initialized, but also each time a new encryption key is exchanged later on, through another channel, or with a different mechanism, e.g. by enabling a key exchange through a secure session using a public-key encryption system, a technique well-known from the art. According to the invention, a new security association can also be formed periodically or upon the occurrence of a particular event such as overflowing of the packet sequence number or detecting transmission of errors.

If this is indeed the case, one proceeds to step 56 where the current encryption key, simply referred to as KEY in the following, becomes the new SA key. Also, the sequence number 'SN' used in the encryption protocol header is reset to 1. However, if answer to interrogation 54 is negative (the usual case) KEY is updated at step 58 from a value derived from the encryption dictionary 46 shown in Fig. 2. As already discussed this value used to update the current key is generally speaking a fixed-size digest, e.g. the result of a hash function or a CRC, applied on the contents of the dictionary which are constantly evolving depending upon the data exchanged between the two nodes.

Once a KEY is defined, step 60 is performed during which data is compressed. The latter step may be made as sophisticated or as simple as necessary depending on which criterion must be first considered. For example, a simple compression algorithm could be retained if computing resources are scarce in nodes. However, if computing resources are not the limiting factor, one may decide to get a better compression ratio using a more complex method such as the one defined in standard V.42 bis of ITU-T (International Telecommunications Union) based on the Ziv-Lempel algorithm previously discussed. However, whichever solution is adopted for compression, the main objective remains that codewords are used in transmission instead of real data, codewords based on an evolving dictionary are actually exchanged.

When compression is done, compressed data is encrypted at step 62 using current KEY. After which, at step 64 an encrypted packet is formatted whose header 'Sequence Number' SN 66 is incremented by one so as the enciphered data can be sent over the line to the peer remote node. It is worth noting here that SN field is always a fixed-size field (typically a 16-bit wide field) so as SN counter eventually wraps. Therefore, it is a good practice that wrapping of the counter associated to this field triggers a new SA so that key updating process resumes with a fresh seed key further contributing to keep nodes transactions secure.

Finally, step 68 performs a hash on the new dictionary contents (or whichever function is selected to get a fixed-size digest of it) in order to build a new key that is used at next loop when process resumes at step 54.

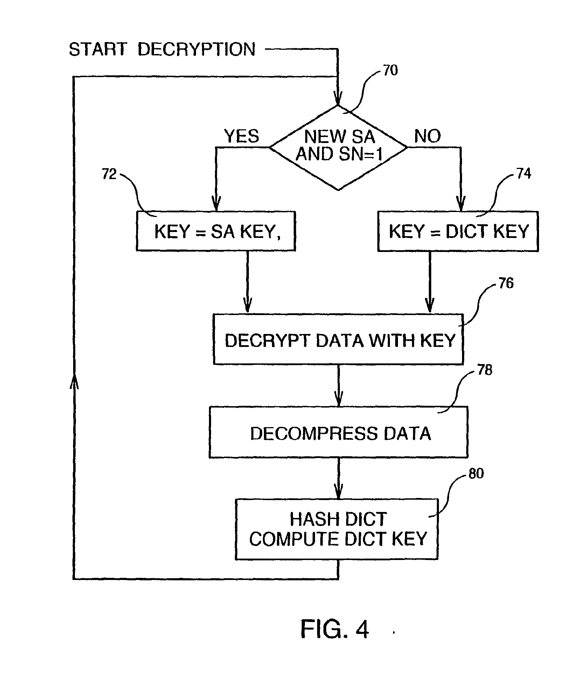

Fig. 4 describes the decryption process which starts with the receiving of a new packet from a peer node. This may take place only after a SA (security association) has been set between the two nodes and implies that a first common key is available in them to start with. Steps 70, 72 and 74 are just identical to what is described for the encryption process in Fig. 3 here above. Briefly, KEY to use, as with encryption, is either a new key resulting of a new SA or an updated one resulting of a computation over current contents of dictionary. Once KEY is selected, next step 76 is to decrypt the incoming data from it. Then, at step 78 data is de-compressed. While starting from the current contents of the dictionary, the decompression step itself has the effect of updating it, based on the new received data from the peer node (so as dictionary is constantly evolving). Finally, as with encryption, a new hash on the dictionary contents must return, step 80, a value identical to the one obtained with the encryption process, in the remote node, and from which the same new key is derived after which receive process resumes at step 70. Obviously, all this implicitly assumes that no error occurs in the transmission so as the evolution of the dictionaries is kept identical on both ends of the secure link. However, as soon as an error is detected, all standard methods known from the art may possibly be applied to recover so as communication can resume in a known state. This includes the simple solution of restarting from scratch with a new key while dictionaries are reset. As far as this latter point is concerned the invention does not assume that, at initialization or after a recovery on error, dictionaries need to be 'blanked' or may just contain a skeleton from which they are progressively rebuilt through the data compression process. Dictionaries may be filled with predefined values however, at the expense of having to consider this as a secret to be protected like keys.

## Claims

1. Method of updating an encryption key in a data communication system comprising a transmitting node (14) which receives clear data from a transmitting DTE (10) and a receiving node (16) which transmits clear data to a receiving DTE (12), said transmitting and receiving nodes forming a security association (20) sharing said encryption key for communicating cipher data between them and including identically evolving databases (22 or 24); said method comprising the steps of :
upon transmitting data from said transmitting node to said receiving node :
- updating said data base (22), in said transmitting node by using said clear data received from said transmitting DTE,
- encrypting (62) in said transmitting node data to be transmitted by using the current value of said encryption key,
- transmitting (64) encrypted data to said receiving node, and
- deriving (68) from the new contents of said data base in said transmitting node, a next-to-use encryption key,
upon receiving encrypted data in said receiving node :
- decrypting (76) in said receiving node, received encrypted data by using the current value of said encryption key,
- updating identically said data base (24) in said receiving node, by using the received decrypted data,
- deriving (80) from contents of said updated data base in said receiving node, a next-to-use decryption key identical to said next-to-use encryption key;
**characterized in that** said identically evolving data base (22 or 24) in said transmitting node (14) and receiving node (16) is an identical dictionary (46) for respectively compressing data before encrypting in said transmitting node and decompressing data after decrypting in said receiving node.

2. The method according to claim 1, further comprising a step of compressing (60) said clear data received from said transmitting DTE (10) by said transmitting node (14) before said step of encrypting.

3. The method according to claim 2, further comprising a step of decompressing (78) the decrypted data after said step of decrypting in said receiving node (16) before transmitting clear data to said receiving DTE (12).

4. The method according to any one of the preceding claims, wherein said identical dictionary in said nodes (14, 16) is the result of using the Ziv-Lempel algorithm or any one of its variants to perform said data compressing and said data decompressing.

5. The method according to any one of the previous claims, wherein said steps of deriving said next-to-use encryption/decrytion key further include the step of obtaining a digest from the current contents of said evolving data base (22, 24), said step of obtaining a digest further including the step of utilizing directly said digest as the next-to-use key or combining said digest to said current key to get a next-to-use key.

6. The method according to claim 5, wherein said step of obtaining a digest from the contents of said evolving data base (22, 24) is a step of hashing to a fixed-size value (68 or 80).

7. The method according to claim 5, wherein said step of obtaining a digest from the contents of said evolving data base (22, 24) is a step of computing a CRC.

8. The method according to claim 5, wherein said step of obtaining a digest from the contents of said evolving data base (22, 24) is a step of detecting applying any other one-way like function.

9. The method according to any one of the previous claims, wherein a new security association (20) is formed periodically or upon overflowing of the packet sequence number.

10. The method according to any one of the previous claims, wherein a new security association (20) is formed periodically or upon detecting transmission errors.

11. The method according to claim 9 or 10, wherein said data base (22, 24) is reset to a secret set of values on restarting said new security association (20).

12. The method according to any one of the previous claims, wherein said data base (22, 24) is reset to a secret set of values on initialization.

13. A secure data communications system comprising means adapted for carrying out the method according to any one of the previous claims.

14. A computer-readable medium comprising instructions for carrying out the method according to any one of the claims 1 to 12.

## Patentansprüche

1. Verfahren zur Aktualisierung eines Verschlüsselungsschlüssels in einem Datenübertragungssystem, das einen Sendeknoten (14), der unverschlüsselte Daten von einer Sende-Datenendeinrichtung (10) empfängt, und einen Empfangsknoten (16), der unverschlüsselte Daten an eine Empfangs-Datenendeinrichtung (12) sendet, umfasst, wobei der Sendeknoten und der Empfangsknoten eine Sicherheitskombination (20) bilden, den Verschlüsselungsschlüssel zum Austausch von Verschlüsselungsdaten zwischen ihnen gemeinsam benutzen und identische sich weiterentwickelnde Datenbanken (22 oder 24) enthalten; wobei das Verfahren die folgenden Schritte umfasst:
nach der Übertragung von Daten von dem Sendeknoten an den Empfangsknoten:
- Aktualisieren der Datenbank (22) in dem Sendeknoten, indem die von der Sende-Datenendeinrichtung empfangenen unverschlüsselten Daten verwendet werden,
- Verschlüsseln (62) von zu sendenden Daten in dem Sendeknoten, indem der aktuelle Wert des Verschlüsselungsschlüssels verwendet wird,
- Senden (64) von verschlüsselten Daten an den Empfangsknoten und
- Ableiten (68) eines als Nächstes zu verwendenden Verschlüsselungsschlüssels von dem neuen Inhalt der Datenbank in dem Sendeknoten,
nach dem Empfang von verschlüsselten Daten in dem Empfangsknoten:
- Entschlüsseln (76) der empfangenen verschlüsselten Daten in dem Empfangsknoten, indem der aktuelle Wert des Verschlüsselungsschlüssels verwendet wird,
- identisches Aktualisieren der Datenbank (24) in dem Empfangsknoten, indem die empfangenen entschlüsselten Daten verwendet werden,
- Ableiten (80) eines als Nächstes zu verwendenden Entschlüsselungsschlüssels, der mit dem als Nächstes zu verwendenden Verschlüsselungsschlüssel identisch ist, von dem Inhalt der aktualisierten Datenbank in dem Empfangsknoten;
**dadurch gekennzeichnet, dass** die sich identisch weiterentwickelnde Datenbank (22 oder 24) in dem Sendeknoten (14) und in dem Empfangsknoten (16) ein identisches Wörterbuch (46) ist, um Daten vor der Verschlüsselung in dem Sendeknoten zu komprimieren beziehungsweise Daten nach der Entschlüsselung in dem Empfangsknoten zu dekomprimieren.

2. Verfahren nach Anspruch 1, das des Weiteren einen Schritt der Komprimierung (60) der unverschlüsselten Daten umfasst, die der Sendeknoten (14) von der Sende-Datenendeinrichtung (10) vor dem Schritt der Verschlüsselung empfangen hat.

3. Verfahren nach Anspruch 2, das des Weiteren einen Schritt der Dekomprimierung (78) der entschlüsselten Daten im Anschluss an den Schritt der Entschlüsselung in dem Empfangsknoten (16) umfasst, bevor unverschlüsselte Daten an die Empfangs-Datenendeinrichtung (12) gesendet werden.

4. Verfahren nach einem der vorhergehenden Ansprüche, wobei das identische Wörterbuch in den Knoten (14, 16) das Ergebnis der Verwendung des Ziv-Lempel-Algorithmus oder einer beliebigen seiner Varianten ist, um die Datenkomprimierung und die Datendekomprimierung durchzuführen.

5. Verfahren nach einem der vorhergehenden Ansprüche, wobei die Schritte des Ableitens des als Nächstes zu verwendenden Verschlüsselungs-/Entschlüsselungsschlüssels des Weiteren den Schritt des Abrufens einer Zusammenfassung des aktuellen Inhalts der sich weiterentwickelnden Datenbank (22, 24) beinhalten, wobei der Schritt des Abrufens einer Zusammenfassung des Weiteren den Schritt der direkten Verwendung der Zusammenfassung als den als Nächstes zu verwendenden Schlüssel oder der Verknüpfung der Zusammenfassung mit dem aktuellen Schlüssel beinhaltet, um einen als Nächstes zu verwendenden Schlüssel zu erhalten.

6. Verfahren nach Anspruch 5, wobei der Schritt des Abrufens einer Zusammenfassung des Inhalts der sich weiterentwickelnden Datenbank (22, 24) ein Schritt ist, in dem mittels der Hash-Funktion eine Abbildung auf einen Wert fester Größe (68 oder 80) vorgenommen wird.

7. Verfahren nach Anspruch 5, wobei der Schritt des Abrufens einer Zusammenfassung des Inhalts der sich weiterentwickelnden Datenbank (22, 24) ein Schritt ist, in dem ein CRC-Wert berechnet wird.

8. Verfahren nach Anspruch 5, wobei der Schritt des Abrufens einer Zusammenfassung des Inhalts der sich weiterentwickelnden Datenbank (22, 24) ein Schritt ist, in dem die Anwendung einer beliebigen anderen Funktion, die ähnlich einer Einwegfunktion ist, festgestellt wird.

9. Verfahren nach einem der vorhergehenden Ansprüche, wobei eine neue Sicherheitskombination (20) in regelmäßigen Abständen oder nach dem Überlaufen der Paketfolgenummer gebildet wird.

10. Verfahren nach einem der vorhergehenden Ansprüche, wobei eine neue Sicherheitskombination (20) in regelmäßigen Abständen oder nach der Feststellung von Übertragungsfehlern gebildet wird.

11. Verfahren nach Anspruch 9 oder Anspruch 10, wobei die Datenbank (22, 24) nach dem Neustart der neuen Sicherheitskombination (20) auf einen geheimen Satz von Werten zurückgesetzt wird.

12. Verfahren nach einem der vorhergehenden Ansprüche, wobei die Datenbank (22, 24) nach der Initialisierung auf einen geheimen Satz von Werten zurückgesetzt wird.

13. Sicheres Datenübertragungssystem, das ein Mittel umfasst, welches zur Durchführung des Verfahrens nach einem der vorhergehenden Ansprüche ausgelegt ist.

14. Rechnerlesbarer Datenträger, der Befehle zur Durchführung des Verfahrens nach einem der Ansprüche 1 bis 12 umfasst.

## Revendications

1. Procédé de mise à jour d'une clé de cryptage dans un système de communications de données comprenant un noeud d'émission (14) qui reçoit des données en clair d'un équipement DTE d'émission (10) et un noeud de réception (16) qui transmet des données en clair à un équipement DTE de réception (12), lesdits noeuds d'émission et de réception formant une association de sécurité (20) partageant ladite clé de cryptage pour communiquer des données chiffrées entre eux et comprenant des bases de données évoluant de manière identique (22 ou 24),
ledit procédé comprenant les étapes consistant à :
lors de l'émission de données depuis ledit noeud d'émission vers ledit noeud de réception :
- mettre à jour ladite base de données (22) dans ledit noeud d'émission en utilisant lesdites données en clair reçues dudit équipement DTE d'émission,
- crypter (62) dans ledit noeud d'émission les données devant être transmises en utilisant la valeur en cours de ladite clé de cryptage,
- transmettre (64) les données cryptées audit noeud de réception, et
- obtenir (68) à partir des nouveaux contenus de ladite base de données dans ledit noeud d'émission, la prochaine clé de cryptage à utiliser,
lors de la réception de données cryptées dans ledit noeud de réception :
- décrypter (76) dans ledit noeud de réception, les données cryptées reçues en utilisant la valeur en cours de ladite clé de cryptage,
- mettre à jour de manière identique ladite base de données (24) dans ledit noeud de réception, en utilisant les données décryptées reçues,
- obtenir (80) à partir du contenu de ladite base de données mise à jour dans ledit noeud de réception, la prochaine clé de décryptage à utiliser identique à ladite prochaine clé de cryptage à utiliser,
**caractérisé en ce que** ladite base de données évoluant de manière identique (22 ou 24) dans ledit noeud d'émission (14) et ledit noeud de réception (16) est un dictionnaire identique (46) destiné à respectivement compresser les données avant le cryptage dans ledit noeud d'émission et à décompresser les données après le décryptage dans ledit noeud de réception.

2. Procédé selon la revendication 1, comprenant en outre une étape consistant à compresser (60) lesdites données en clair reçues dudit équipement DTE d'émission (10) par ledit noeud d'émission (14) avant ladite étape de cryptage.

3. Procédé selon la revendication 2, comprenant en outre une étape consistant à décompresser (78) les données décryptées après ladite étape de décryptage dans ledit noeud de réception (16) avant la transmission des données en clair audit équipement DTE de réception (12).

4. Procédé selon l'une quelconque des revendications précédentes, dans lequel ledit dictionnaire identique dans lesdits noeuds (14, 16) est le résultat de l'utilisation d'un l'algorithme de Ziv-Lempel ou de l'une quelconque de ses variantes pour réaliser ladite compression de données et ladite décompression de données.

5. Procédé selon l'une quelconque des revendications précédentes, dans lequel lesdites étapes d'obtention de ladite prochaine clé de cryptage/décryptage à utiliser comprend en outre l'étape consistant à obtenir une synthèse à partir du contenu en cours de ladite base de données évoluant (22, 24), ladite étape consistant à obtenir une synthèse comprend en outre l'étape consistant à utiliser directement ladite synthèse en tant que prochaine clé à utiliser ou à combiner ladite synthèse pour ladite clé en cours pour obtenir une prochaine clé à utiliser.

6. Procédé selon la revendication 5, dans lequel ladite étape d'obtention d'une synthèse à partir du contenu de ladite base de données évoluant (22, 24) est une étape consistant à hacher à une valeur à taille fixe (68 ou 80).

7. Procédé selon la revendication 5, dans lequel ladite étape d'obtention d'une synthèse à partir du contenu de ladite base de données évoluant (22, 24) est une étape de calcul d'un contrôle CRC.

8. Procédé selon la revendication 5, dans lequel ladite étape d'obtention d'une synthèse à partir du contenu de ladite base de données évoluant (22, 24) est une étape de détection de l'application d'une autre fonction quelconque telle qu'une fonction unidirectionnelle.

9. Procédé selon l'une quelconque des revendications précédentes, dans lequel une nouvelle association de sécurité (20) est formée périodiquement ou lors du dépassement de capacité du numéro de séquence de paquet.

10. Procédé selon l'une quelconque des revendications précédentes, dans lequel une nouvelle association de sécurité (20) est formée périodiquement ou lors de la détection d'erreurs de transmission.

11. Procédé selon la revendication 9 ou 10, dans lequel ladite base de données (22, 24) est réinitialisée à un ensemble de valeurs secret lors du redémarrage de ladite nouvelle association de sécurité (20).

12. Procédé selon l'une quelconque des revendications précédentes, dans lequel ladite base de données (22, 24) est réinitialisée à un ensemble de valeurs secret lors de l'initialisation.

13. Système de communications de données sécurisé comprenant un moyen conçu pour réaliser le procédé conforme à l'une quelconque des revendications précédentes.

14. Support lisible par un ordinateur comprenant des instructions destinées à réaliser le procédé conforme à l'une quelconque des revendications 1 à 12.
